# FASCICULE DE BREVET EUROPEEN

(11) **EP 0 615 894 B1**
(45) Date de publication et mention de la délivrance du brevet: **15.05.1996**
(21) Numéro de dépôt: 94400535.4
(22) Date de dépôt: 11.03.1994
(51) Int. Cl.: B62D 25/20

(54) **Structure d'habitacle pour véhicule automobile comportant des éléments d'ancrage de siège**
Fahrzeuggehäusestruktur mit Sitzverankerungseinrichtung
Vehicle compartment structure including seat anchoring devices

(30) Priorité: 16.03.1993 FR 9303013
(43) Date de publication de la demande: 21.09.1994
(73) Titulaire: MATRA AUTOMOBILE, F-75116 Paris (FR)
(72) Inventeur: Cosnard, Joel, F-78340 Les Clayes sous Bois (FR); Gros, James, F-75015 Paris (FR)
(74) Mandataire: Loisel, Bertrand

(56) Documents cités:
- FR-A- 2 610 884
- NL-C- 65 367
- PATENT ABSTRACTS OF JAPAN vol. 8, no. 96 (M-294) 4 Mai 1984 & JP-A-59 011 980 (NISSAN) 21 Janvier 1984

## Description

La présente invention concerne une structure d'habitacle pour véhicule automobile, pourvue de moyens pour le montage de sièges. L'invention concerne notamment le cas des sièges qui sont aisément montables et démontables, et qui permettent ainsi de modifier l'agencement de l'habitacle, ou de libérer de l'espace dans l'habitacle.

Dans certaines réalisations, chaque siège et son mécanisme associé sont accrochés sur des anneaux ou des doigts transversaux fixés au plancher de l'habitacle. Cette disposition ne donne pas entièrement satisfaction en termes de sécurité. En cas de choc frontal relativement violent, les anneaux risquent d'être arrachés du plancher, ou le plancher lui-même risque d'être arraché, en raison de l'inertie du siège et de son occupant. Ce risque est particulièrement important lorsque le siège est orienté vers l'arrière du véhicule, ce que permettent certains modèles de véhicule. Dans d'autres réalisations, les anneaux ou doigts d'ancrage sont montés dans l'habitacle par l'intermédiaire de mécanismes à glissière qui peuvent également se trouver arrachés ou déformés en cas de choc violent.

L'invention vise notamment à réduire les risques ainsi encourus, en améliorant l'ancrage des sièges dans l'habitacle.

L'invention propose ainsi une structure d'habitacle pour véhicule automobile, comprenant des longerons et des traverses sur lesquels est disposée une tôle formant plancher, des éléments d'ancrage faisant saillie au-dessus de ladite tôle pour le montage de sièges dans l'habitacle, caractérisée en ce que les éléments d'ancrage sont rivetés directement sur des traverses.

En cas de choc violent, il est alors pratiquement impossible que le siège quitte son emplacement par suite d'un arrachement des éléments d'ancrage, car ceux-ci sont fixés directement et solidement sur un élément robuste de la structure du véhicule. Ce mode de montage des éléments d'ancrage est avantageux car il écarte la nécessité de prévoir des renforcements spéciaux.

D'autres particularités et avantages de la présente invention apparaîtront dans la description ci-après d'un exemple de réalisation préféré et non limitatif. Aux dessins annexés :
- la figure 1 est une vue en perspective avec coupes montrant de façon partielle une structure d'habitacle selon l'invention ;
- la figure 2 est une vue schématique en élévation illustrant le mode d'accrochage d'un siège.
- la figure 3 est une vue schématique de dessus d'un plancher d'habitacle selon l'invention.

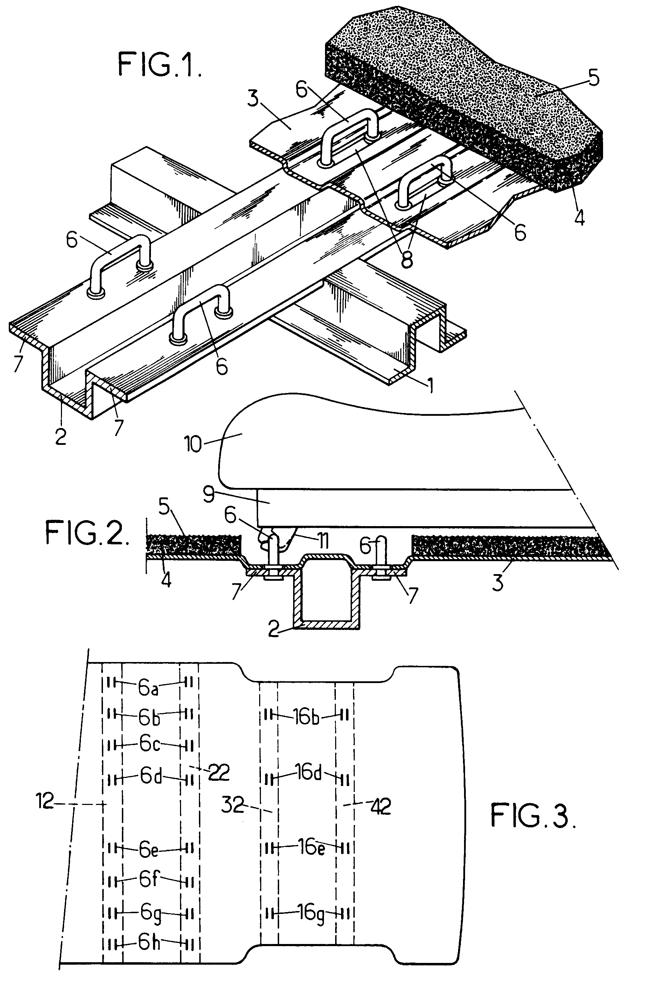

En référence à la figure 1, une structure d'habitacle pour véhicule automobile comprend de façon classique des longerons 1 et des traverses 2 à sa partie inférieure. Dans une structure selon l'invention, la position des traverses 2 suivant la direction longitudinale correspondra approximativement aux emplacements prévus pour les pieds des sièges de l'habitacle.

Sur les longerons et les traverses est disposée une tôle 3 formant plancher. Ce plancher est recouvert d'un matériau d'isolation phonique 4, lui-même recouvert d'une moquette 5.

Comme le montrent les figures 1 et 2, des anneaux 6 sont prévus en tant qu'éléments d'ancrage pour le montage des sièges dans l'habitacle. Ces anneaux sont fixés directement sur les traverses 2 par rivetage. Dans l'exemple représenté, les anneaux 6 sont en forme de U renversé et disposés suivant un plan transversal du véhicule. Les deux extrémités des branches de l'U sont rivetées sur la traverse 2. Dans l'exemple représenté, les traverses 2 sont constituées par des profilés dont la section a une forme générale en U complétée à sa partie supérieure par deux ailes 7 s'étendant dans un même plan de part et d'autre du U. Des trous sont percés dans ces ailes 7 pour y riveter les anneaux 6. Les traverses 2 sont typiquement réalisées en acier avec une épaisseur de 2 mm environ.

La mise en forme générale de la tôle 3 formant plancher est réalisée par emboutissage. On voit notamment aux figures 1 et 2 que la tôle 3 comporte des parties légèrement enfoncées par lesquelles elle prend appui sur les ailes 7 des traverses 2. Dans ces parties enfoncées sont ménagées des ouvertures 8 en forme de boutonnière pour laisser passer les anneaux 6. Pour obtenir une robustesse suffisante, on peut par exemple réaliser les anneaux 6 à partir d'un fil d'acier de diamètre 8 mm environ. En général, la hauteur des anneaux 6 est telle qu'ils ne dépassent pas au-dessus de la moquette 5, afin d'éviter toute gène lorsque les sièges sont démontés.

Le montage d'un siège est illustré schématiquement à la figure 2. Chaque siège comporte un socle 9, une assise 10 pouvant coulisser par rapport au socle au moyen d'un mécanisme connu non représenté, et un dossier non représenté. Le socle 9 est muni de quatre pieds 11 qui viennent s'ancrer dans les anneaux 6 pour maintenir le siège en place. Certains des pieds sont munis de crochets pour verrouiller le siège en place.

Les sièges peuvent être démontés pour libérer de l'espace dans l'habitacle du véhicule. Il est également possible de les déplacer à d'autres emplacements dans l'habitacle, pourvu que des anneaux 6 y soient prévus. Un certain nombre d'anneaux 6 sont prévus le long de chaque traverse 2 (figure 1) pour permettre de choisir la position du siège suivant la direction transversale. En outre, on voit que les anneaux 6 sont fixés par paires sur les traverses, les anneaux 6 d'une même paire étant respectivement fixés sur les deux ailes 7 de la traverse 2 de manière à être décalés selon la direction longitudinale. Ceci permet un réglage supplémentaire de la position du siège suivant la direction longitudinale. Il est également possible de positionner le siège de façon qu'il soit orienté soit vers l'avant soit vers l'arrière du véhicule.

La structure d'habitacle selon l'invention convient notamment pour les véhicules de type "monospace" dans lesquels il peut y avoir 0, 1 ou 2 rangées de sièges derrière le siège du conducteur. Dans ce cas, on prévoira quatre traverses parallèles 2, dont l'espacement sera choisi en fonction de la dimension des sièges. La figure 3 illustre une répartition avantageuse des anneaux sur le plancher de l'habitacle d'un tel véhicule. Sur chacune des deux premières traverses 12, 22 situées derrière le siège du conducteur sont prévus huit anneaux (ou paires d'anneaux) 6a à 6h disposés symétriquement de façon qu'il y ait cinq positions possibles pour un siège le long de ces traverses. Ces cinq positions correspondent respectivement à une installation du siège au moyen des anneaux (6a, 6c), (6d, 6e), (6f, 6h), (6b, 6d) et (6e, 6g). Les trois premières positions permettent d'installer jusqu'à trois sièges sur la première rangée, et les deux dernières permettent d'installer deux sièges plus espacés.

Sur chacune des deux dernières traverses 32, 42, situées au droit des roues arrière du véhicule sont prévus quatre anneaux (ou paires d'anneaux) 16b, 16d, 16e, 16g respectivement alignés sur les anneaux 6b, 6d, 6e, 6g suivant la direction transversale. Il y a ainsi trois positions possibles pour un siège le long des traverses 32, 42, qui correspondent respectivement aux anneaux (16b, 16d), (16e, 16g) et (16d, 16e), et qui permettent l'installation d'un ou deux sièges sur la deuxième rangée.

## Revendications

1. Structure d'habitacle pour véhicule automobile, comprenant des longerons (1) et des traverses (2) sur lesquels est disposée une tôle (3) formant plancher, des éléments d'ancrage (6) faisant saillie au-dessus de ladite tôle pour le montage de sièges dans l'habitacle, caractérisée en ce que les éléments d'ancrage (6) sont rivetés directement sur des traverses (2).

2. Structure d'habitacle selon la revendication 1, caractérisée en ce que les éléments d'ancrage sont des anneaux transversaux (6) en forme de U renversé, les extrémités des branches de l'U étant rivetées sur une traverse (2).

3. Structure d'habitacle selon la revendication 2, caractérisée en ce que chaque anneau (6) traverse la tôle formant plancher (3) à travers une ouverture (8) en forme de boutonnière ménagée dans celle-ci.

4. Structure d'habitacle selon l'une quelconque des revendications 1 à 3, caractérisée en ce qu'au moins une traverse (2) comporte à sa partie supérieure deux ailes (7) s'étendant dans un même plan, et en ce que des éléments d'ancrage (6) sont rivetés par paires sur cette traverse, les éléments d'ancrage d'une même paire étant respectivement rivetés sur les deux ailes (7) de la traverse de manière à être décalés selon la direction longitudinale.

5. Structure d'habitacle selon l'une quelconque des revendications 1 à 4, caractérisée en ce qu'elle comporte deux traverses (12, 22) le long desquelles sont espacés huit éléments d'ancrage respectifs (6a à 6h) permettant d'installer un siège en cinq positions différentes le long desdites traverses.

6. Structure d'habitacle selon la revendication 5, caractérisée en ce qu'elle comporte en outre deux autres traverses (32, 42) situées au droit des roues arrière du véhicule, le long desquelles sont espacés quatre éléments d'ancrage respectifs (16b, 16d, 16e, 16g) permettant d'installer un siège en trois positions différentes le long desdites autres traverses.

7. Structure d'habitacle selon la revendication 6, caractérisée en ce que les éléments d'ancrage (16b, 16d, 16e, 16g) rivetés sur lesdites autres traverses (32, 42) sont alignés suivant la direction transversale avec des éléments d'ancrage respectifs (6b, 6d, 6e, 6g) rivetés sur les deux premières traverses (12, 22).

## Claims

1. Passenger compartment structure for a motor vehicle comprising longitudinal members (1) and cross members (2) on which a sheet (3) forming the floor is arranged, fitting seats in the passenger compartment, characterized in that the anchoring elements (6) are riveted directly to cross members (2).

2. Passenger compartment structure according to Claim 1, characterized in that the anchoring elements are transverse rings (6) in the shape of an inverted U, the ends of the arms of the U being riveted to a cross member (2).

3. Passenger compartment structure according to Claim 2, characterized in that each ring (6) passes through the sheet forming the floor (3) through a buttonhole-shaped aperture (8) made in the sheet.

4. Passenger compartment structure according to one of Claims 1 to 3, characterized in that at least one cross member (2) comprises in its upper part two wings (7) extending in one and the same plane, and in that anchoring elements (6) are riveted to this cross member in pairs, the anchoring elements of one and the same pair being respectively riveted to the two wings (7) of the cross member in such a way as to be staggered in the longitudinal direction.

5. Passenger compartment structure according to one of Claims 1 to 4, characterized in that it comprises two cross members (12, 22) along which are spaced eight respective anchoring elements (6a to 6h) enabling a seat to be installed in five different positions along the said cross members.

6. Passenger compartment structure according to Claim 5, characterized in that it also comprises two other cross members (32, 42) located at right angles to the vehicle's rear wheels, along which are spaced four respective anchoring elements (16b, 16d, 16e, 16g) enabling a seat to be installed in three different positions along the said other cross members.

7. Passenger compartment structure according to Claim 6, characterized in that the anchoring elements (16b, 16d, 16e, 16g) riveted to the said other cross members (32, 42) are aligned in the transverse direction with the respective anchoring elements (6b, 6d, 6e, 6g) riveted to the first two cross members (12, 22).

## Patentansprüche

1. Fahrzeuggehäusestruktur mit Längsträgern (1) und Querträgern (2), auf denen ein Blech (3) angeordnet ist, welches eine Plattform bildet, mit Verankerungselementen (6), die für die Montage von Sitzen in dem Gehäuse über das Blech hervorragen, **dadurch gekennzeichnet, daß** die Verankerungselemente (6) direkt mit den Querträgern (2) vernietet sind.

2. Gehäusestruktur nach Anspruch 1, **dadurch gekennzeichnet, daß** die Verankerungselemente transversale Ringe (6) in Form eines umgedrehten U sind, wobei die Enden der Schenkel des U mit einem der Querträger (2) vernietet sind.

3. Gehäusestruktur nach Anspruch 2, **dadurch gekennzeichnet, daß** jeder Ring (6) durch das Blech hindurchreicht, welches die Plattform (3) bildet, und zwar mittels einer Öffnung (8) in der Form eines Knopfloches, welches in demselben ausgebildet ist.

4. Gehäusestruktur nach einem der Ansprüche 1 bis 3, **dadurch gekennzeichnet, daß** mindestens ein Querträger (2) in seinem oberen Bereich zwei Flansche (7) umfaßt, die sich in derselben Ebene erstrecken, und dadurch, daß die Vrankerungselemente (6) paarweise auf dem Querträger vernietet sind, wobei die Verankerungselemente des gleichen Paares jeweils mit den beiden Flanschen (7) des Querträgers in einer in Längsrichtung versetzten Weise vernietet sind.

5. Gehäusestruktur nach einem der Ansprüche 1 bis 4, **dadurch gekennzeichnet, daß** sie zwei Querträger (12, 22) umfaßt, über deren Länge jeweils 8 Verankerungselemente (6a bis 6h) verteilt sind, die die Installation eines Sitzes in fünf unterschiedlichen Positionen über die Länge des Querträgers zulassen.

6. Gehäusestruktur nach Anspruch 5, **dadurch gekennzeichnet, daß** sie darüber hinaus zwei andere Querträger (32, 42) umfaßt, die auf der Höhe der Hinterräder des Fahrzeuges angeordnet sind, über deren Länge jeweils vier Verankerungselemente (16b, 16d, 16e, 16g) verteilt sind, die es erlauben, einen Sitz in drei unterschiedlichen Positionen über die Länge dieser anderen Querträger zu installieren.

7. Gehäusestruktur nach Anspruch 6, **dadurch gekennzeichnet, daß** die Verankerungselemente (16b, 16d, 16e, 16g), die mit den anderen Querträgern (32, 42) vernietet sind, in transversaler Richtung mit den jeweiligen Verankerungselementen (6b. 6d, 6e, 6g) ausgerichtet sind, die mit den beiden ersten Querträgern (12, 22) vernietet sind.
